# EUROPEAN PATENT SPECIFICATION

(11) **EP 3 480 137 B1**
(45) Date of publication and mention of the grant of the patent: **13.04.2022**
(21) Application number: 18204513.8
(22) Date of filing: 06.11.2018
(51) Int. Cl.: B65F 1/10, B65F 1/14, B65F 1/16, G06Q 10/00, G06Q 10/08, G06K 17/00

(54) **A SYSTEM FOR VOLUMETRIC DISPOSAL OF WASTE IN ROAD BINS**
SYSTEM ZUR VOLUMETRISCHEN ENTSORGUNG VON ABFÄLLEN IN STRASSENBEHÄLTERN
SYSTÈME POUR L'ÉLIMINATION VOLUMÉTRIQUE DE DÉCHETS DANS DES BENNES

(30) Priority: 06.11.2017 IT 201700125869
(43) Date of publication of application: 08.05.2019
(73) Proprietor: Foresti, Antonio Luigi Piero Maria, 84019 Vietri sul Mare (SA) (IT)
(72) Inventor: Foresti, Antonio Luigi Piero Maria, 84019 Vietri sul Mare (SA) (IT)
(74) Representative: Fezzardi, Antonio

(56) References cited:
- EP-A2- 2 169 761
- WO-A1-95/01062
- DE-A1- 19 835 762
- US-A1- 2012 318 791

## Description

The present invention substantially relates to the sector of bins for waste of the type, which must be handled and lifted regularly for emptying and, more specifically, for bins made of plastic material.

Recent Italian legislation regarding waste is increasingly aimed at the adoption, by Councils, of an "equivalent" charge, i.e. substantially proportionate to the effective amount of waste, which the user disposes of in the bin. If, on the one hand, legislation is aimed at considerably simplifying procedures, on the other, it casts shadows over the equivalent nature of the charge.

In fact, Law 147/2013 allows Councils to finance the waste management service with an equivalent charge instead of a tax provided that precise measuring systems have been developed for the amount of waste disposed of at the public service. The criteria for the development, by Councils, of such systems for the precise measurement or, nonetheless, management systems, which are based on corrections to the allocation criteria of the cost of the service, are aimed at implementing an effective equivalent charge.

The object of the decree strategy is to define homogenous criteria for precise waste measurement, allowing it to be quantified by Councils in terms of weight or even only volume.

Thus, the need for technical solutions is felt capable of: quantifying the waste disposed of and univocally associating the waste disposed of and quantified with the user who made said disposal.

The most commonly used systems are essentially two in number and, for the purposes of determining the weight, a specific weight coefficient is used for both systems, which is determined by the Council based on various parameters.

The first is the separate "door-to-door" collection (sometimes abbreviated to PaP in Italy). It is a waste management technique, which includes the regular collection, from the user's home, of urban waste produced by the same.

As said, the waste is weighed indirectly, calculating the volume based on the size of the bin assigned to the user and univocally associated therewith by means of an RFID tag. Then, based on the number of disposals made for each user, the charge to be applied is normally calculated according to the "production" of the most polluting waste (dry non-recyclables).

When the door-to-door system is set up, the "road" bins are normally removed from the whole geographical area in question.

The second system refers to the use of road bins provided with a «precise» measuring system and a volumetric restrictor. In practice, in this case, the bins are provided with a predetermined volume cap fixed to the cover (locked in a closed position) and they can only be opened by means of a personalized electronic key, which is given to citizens. Said key is recognized by a software, which records the particular user's disposal, attributing an estimated weight disposal, which, as for the previous solution, is used to calculate the charge to be applied.

The instruments by means of which the PAYT (Pay-As-You-Throw)-type systems are introduced in Europe, the USA and Australia are different and have changed rapidly in the last five years, especially due to the development of technologies linked to traceability in general, which have lowered costs, making the application of single RFID Tags possible even on disposable bags.

As mentioned previously, the precise charging systems for the waste disposed of are divided into two methods of application: the first is based on identification of the user (volumetric cap), while the second is based on identification of bins of different volumes associated with a single user (Door-to-Door). Both methods have disadvantages, some of which will be highlighted below.

For the systems with volumetric caps, it is consolidated practice to monitor only the disposal of the non-separate fraction, thus linking the charge, at least in part, to the production of this type of non-recyclable waste.

If we consider that for the separate fraction (with free access) bins are also present in the area, by the side of the bins with volumetric covers and controlled access, the disadvantages of the current volumetric systems can easily be understood.

Indeed, it has been shown that because of the presence of the identification systems, some users have started disposing of their bags of mixed waste illegally in road bins for separate collection, the cover of which is not locked and access to which is not subject to any control. This happens inevitably for various reasons: users are in a rush, the key or badge has been forgotten at home or not assigned yet, bureaucratic holdups, temporary cap malfunctioning, etc.

Just one of these simple problems is enough to lead to an incorrect disposal, also by users who are regularly registered and pay the charge and who would otherwise have no reason to dispose of their waste incorrectly.

An incorrect disposal will result in the dumping of the bag in front of the bin (normally emptied by a single-operated vehicle) or, even worse, the disposal of mixed waste in inappropriate bins. In both cases, there will be increased costs for the community due to the manual collection of the bags abandoned near the bins, or higher costs for the treatment of the recyclable materials contaminated by other fractions.

Other disadvantages of the "volumetric" solution include:
- the costs of the "cap" system applied to the cover, which is normally 2/4 times more expensive than the bin itself;
- improvised applications for the aforesaid cap, which are not integrated with the esthetics of the bin
- excessive weight bearing down on the standard covers
- limited access for handicapped persons

With regard to the second method, while being undeniable that door-to-door collections allow about 20% more separate waste to be intercepted (consequently having a residual value), it is estimated that the cost of Door-to-Door collections with respect to traditional road collections are 30/40% higher.

The reason for such costs can easily be understood because the service is usually carried out by collection machines with a limited capacity, which require at least two/three people on board (driver + 1 worker and sometimes + 2). Furthermore, such organization with collection machines with a limited capacity means that these must be emptied frequently into other larger machines, which stand waiting in predetermined areas and then proceed with disposal at collection sites.

There is also a risk of the waste being contaminated while it is outside awaiting disposal. In fact, such type of collection is structured according to predetermined times and days of the week for users to leave their bin in the road, which is, as said previously, univocally identified.

Finally, since door-to-door collections are carried out "manually", they are a burden on the working conditions for those in charge of the collection, particularly in the case of domestic bins, because such personnel has to empty dozens of bins, with different weights, into the collection machine or, again manually, lift and hook such bins to the bin-emptying system of the collection machine.

It is known, from EP2169761, an RFID antenna, comprising a housing with an antenna winding arranged therein, as well as a bed of a refuse vehicle with an at least partially circular segment-shaped receiving comb for engaging under a receiving collar of a garbage can. The object of EP2169761 is to provide an RFID antenna as well as a bed with such an antenna that provides a sufficiently large positional tolerance between the bed and garbage bin and also meets the requirements of EN DIN and federal German waste management.

DE19835762 substantially discloses a refuse container for multiple access, e.g. for an apartment block, has the lid normally locked. It is released when a user inserts a chip card. The amount of refuse loaded by a user is measured by the increase in loading on sensors in the suspension of the container. This allows separate billing for each user. The lid locks can be opened manually from inside the container, with small holes for illuminating the emergency release catch, e.g. if a child is trapped inside the container. The aim of said container is therefore a dumpster for quantitative detection of the supplied waste and individual billing, which has no lock and the lid can be opened without restriction.

WO 95/01062 merely discloses a remote identification system for containers or other objects, wherein an electrically closed loop is placed around a container or other object. A passive transponder is placed within the vicinity of the electrically closed loop. An electronic interrogator may then be positioned anywhere near the electrically closed loop and would be capable of reading the transponder regardless of the orientation of the transponder with respect to the interrogator.

US2012318791 merely discloses a bin for collecting solid waste, in particular urban waste, provided with a device for weighing the products deposited by a single user, of the type made up of two containers, the outer covering one and the inner one for collecting waste. Such bin includes a rigid frame arranged in the gap between the two containers. Such frame rests on four stanchions on the bottom of the more outer container, where the wheels are applied, whereas on the upper edge some load cells are arranged, which support the most inner container so as to be able to detect the weight of the waste deposited in the bin by the user.

None of cited prior art documents discloses nor suggests a system for preventing that into a road bin, dedicated to contain a specific waste only, is inserted another type of waste; and for preventing that an unauthorized user empties his/her domestic bin into a road bin not corresponding to said user.

It is a main object of the present invention to overcome the above-described problems and disadvantages, preventing users from emptying their domestic bin into a bin, which does not correspond to the type of waste present in the bin, and preventing users from emptying their domestic bin into a bin, which does not belong to their geographical area.

This was achieved, according to the invention, by providing a system, as defined in the following claims.

These and other objects will be better understood with reference to the following description and appended figures, which illustrate, purely by way of a non-limiting example, a preferred embodiment.

In the drawings:

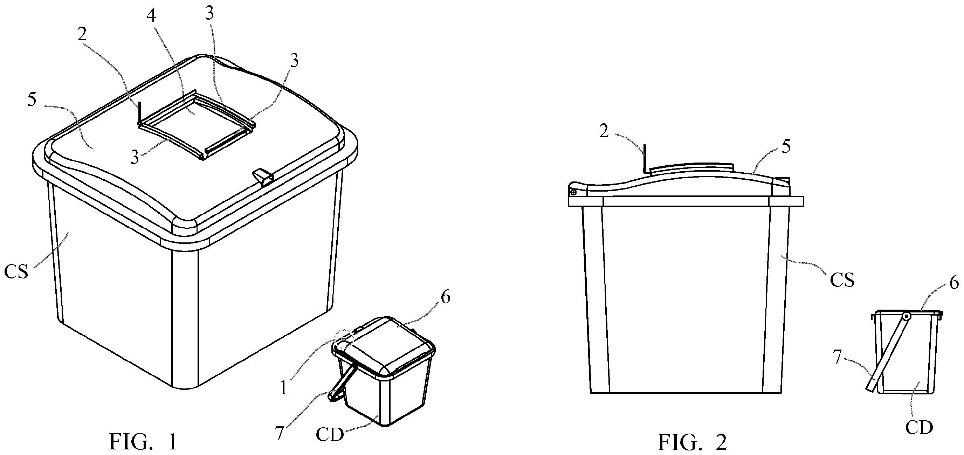

figure 1 is a 3D view of a road bin and a domestic bin according to the present invention;
figure 2 is a side view of the two bins corresponding to fig. 1;

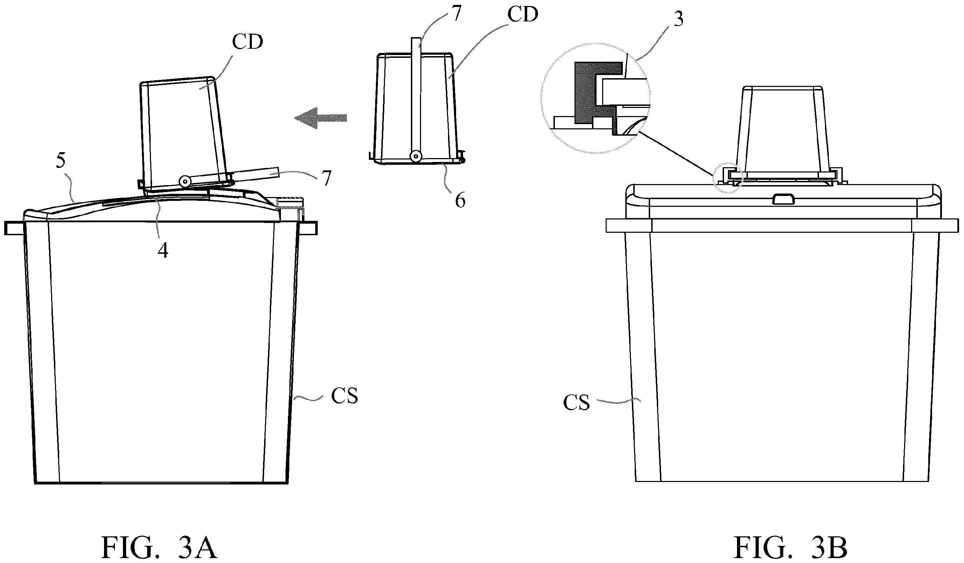

figure 3A is a side view showing the domestic bin in a configuration of pre-insertion, with the handle arranged in such a position as to keep the cover closed, and in an inserted position on the road bin;
figure 3B is a front view showing the domestic bin in an inserted position on the road bin, with an enlarged detail relating to the means for feeding and retaining the domestic bin on the road bin;

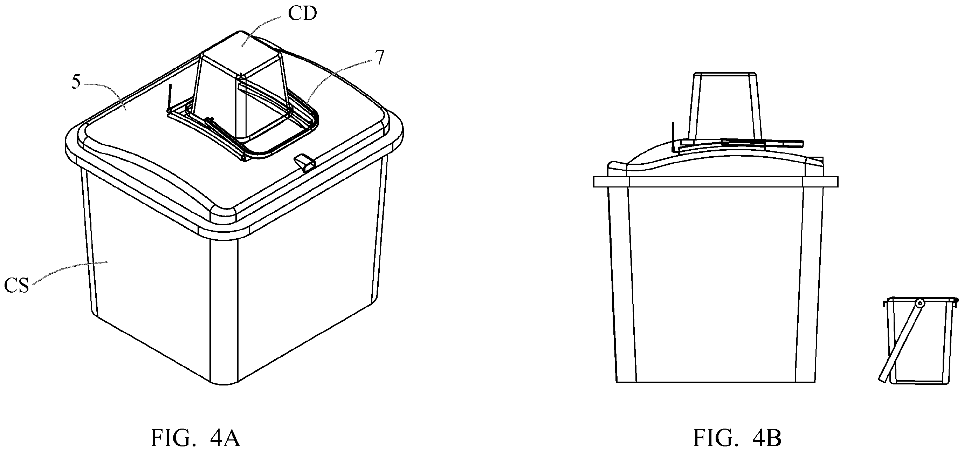

figure 4A is a 3D view corresponding to figure 3A;
figure 4B is a side view corresponding to figure 3A, during the emptying of the domestic bin, with a second domestic bin waiting;

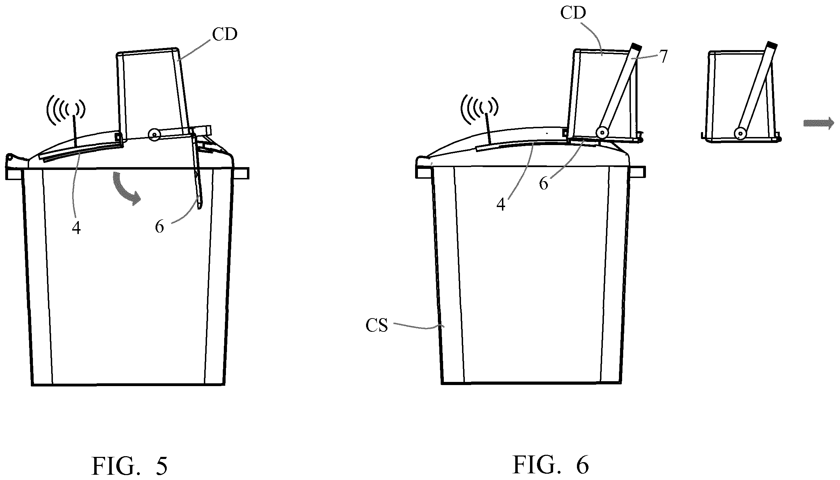

figures 5 and 6 are side views, also showing some internal parts, which show the domestic bin open for emptying and during the step of moving away from the road bin respectively;

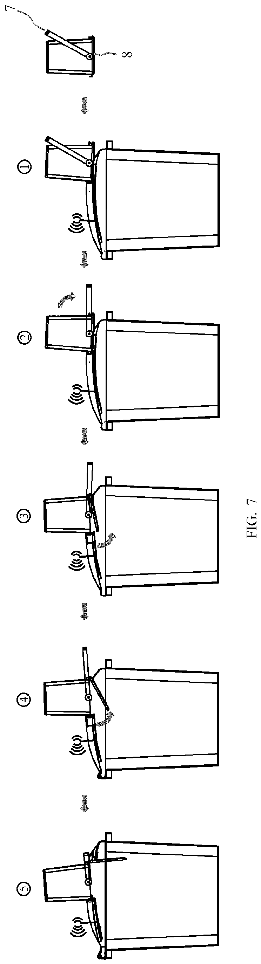

figure 7 shows the sequence of insertion of the domestic bin on the disposal opening of the road bin; and

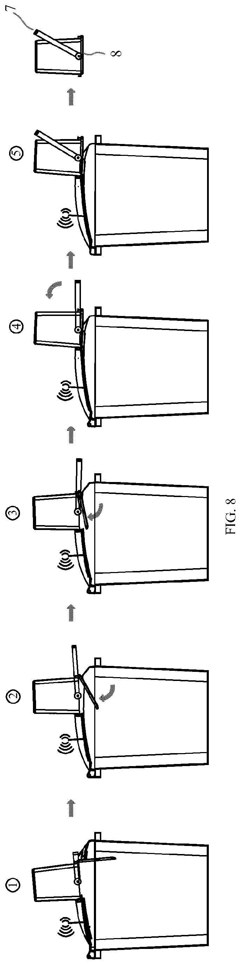

figure 8 shows the sequence of disinsertion of the domestic bin from the disposal opening of the road bin.

The present invention is based on an innovative concept of non-comprised, but "take-way" volumetric disposal and it was conceived, in particular, to optimize the volumetric waste collection system with the aim of solving most of the previously listed disadvantages.

Below, the term *"road"* bin CS will refer to a bin for the collection of waste, whether it is off-soil and/or underground and/or partially underground, emptiable from above (such as bins) or from below (such as bells), like those, which are usually found along the roads off-soil or in special underground shafts with an access mouth off-soil and which are emptied using motor vehicles provided with handling equipment, which allow said bins/containers to be lifted and emptied into a special part of the vehicle.

Similarly, the term *"domestic"* bin CD, below, will refer to a container of the type used for separate door-to-door collections, which users usually keep in their homes and leave in the road - outside their front door - on fixed days and at fixed times for collection of the type of waste corresponding to the bin.

A first particular feature of the invention consists of the fact that it combines the Door-to-Door collection system - and consequently, the possibility of a widespread separate collection - with the collection system by means of road bins CS, using, as access key and identification, a domestic bin CD, which, when coupled to the road bin CS by means of an appropriate mechanical or electromechanical hooking and release device present on the latter, allows the "volumetric" disposal of the waste using the domestic bin CD itself as the volumetric unit of measurement.

A second feature of the present invention is that said domestic bin CD is univocally identifiable, preferably by means of an RFID tag 1 with which it is provided, which is configured to communicate and be recognized by a corresponding RFID communication device provided with an antenna present on the road bin CS.

A first alternative includes the possibility of using other univocal identification systems, such as a QRcode or Barcode, or others adapted for the object.

A second alternative includes said univocal identification of the domestic bin CD being carried out by coupling means configured to operate with a univocal conformation of the system or with mechanical contrasts designed to activate the electronic and/or optical and/or mechanical systems.

The volume of the domestic bin CD is suitable for the type of waste, which it must contain and said hooking and release device 3 is preferably of the mechanical and/or electromechanical type.

Another particular advantageous feature of the invention is that the disposal is made without the user's recognition key, which, as stated previously, is incorporated in the domestic bin CD and which, therefore, cannot be forgotten or lost.

The hooking and release device 3 according to the invention can have various geometric shapes, which are united by the fact that they are aligned on one or more sides, or on the whole perimeter, or on part of the perimeter, of the mouth of a domestic bin CD so that this partially or totally coincides with the mouth present on the road bin.

More specifically, the described hooking and release device 3 comprises feeding and retaining means configured preferably to join the profile of the mouth of the domestic bin CD designed for the disposal, in order to maintain such alignment and prevent the domestic bin CD from separating from the road bin CS (of larger dimensions) on which there may be one or more openings adapted to receive the domestic bins CD.

One variation of the invention (not shown), could include the feeding and retaining also being able to be implemented with a device applied to the bin, configured to allow the mechanical interface of the system modifying the shape of the domestic bin CD to adapt it to the road bin CS.

Said hooking and release device 3 is associated with opening/closing means for the disposal opening 4 when the domestic bin CD is in an appropriate slot, which are authorized, commanded or activated by univocal identification means 2 configured to recognize:
- the data of the user of the domestic bin CD
- the type of waste for which the domestic bin CD is intended;
- the shape of the domestic bin CD desired to be coupled to such system.

Said opening/closing means for the disposal opening 4 are actuated by independent mechanical and/or electromechanical locks, adapted to allow the selective opening of the road bin CS.

Said system allows the re-closing of the road bin CS by means of contrasts and/or levers during the collection/disengagement of the domestic bin CD from the road bin CS.

Said hooking and release device 3 of the domestic bin CD is preferably on the cover 5 of the road bin CS, however, it is possible to include the installation thereof in such positions as to allow use also by handicapped persons.

It is also opportune to note that said RFID communication and recognition means, said hooking and release device 3 and all electromechanical and electronic devices present on the road bin CS are preferably fed by means of at least one battery arranged on the road bin CS itself. Advantageously, to optimize the use of the battery, the opening/closing and recognition system provided on the hooking and release device is usually switched off and only switched on at the time of disposal, i.e. when the domestic bin CD is inserted in the hooking and release device 3 arranged on the road bin CS. Said battery could also be associated with a solar panel for recharging the same during the day.

### KEY:

1. RFID chip
2. Univocal identification means
3. Hooking and release device for the domestic bin
4. Disposal opening with door
5. Cover for the road bin
6. Cover for the domestic bin
7. Carrying handle domestic bin
8. Retaining means for the cover of the domestic bin
CS Road bin
CD Domestic bin

## Claims

1. A system for the volumetric disposal of waste in road bins (CS) off-soil or underground or partially underground, emptiable from above or from below, the system comprising:
- one or more road bins (CS) which are provided with identification (2), communication and recognition means, wherein the identification means (2) comprise at least one of an RFID reader, a QRcode reader and a bar code reader, and are configured to provide a univocal identification of at least one corresponding RFID chip (1) or QRcode or bar code and
- one or more domestic bins (CD) which are provided with at least one corresponding RFID chip (1), QRcode or bar code;
wherein each of the one or more road bins (CS) has a main emptying mouth made inaccessible to users by a cover (5) or an unopenable back, and is further provided with at least one disposal opening (4) comprising a mechanical or electromechanical hooking and release device (3) for the one or more domestic bins (CD), said hooking and release device (3) being configured for allowing the volumetric disposal of waste only in the case of a corresponding one of the one or more domestic bins (CD) being recognized by said identification means (2); wherein said one or more domestic bins (CD) is usable as a volumetric unit of measurement.

2. A system according to the preceding claim, **characterized in that** each of said one or more domestic bins (CD) is univocally identifiable by means of an RFID tag or a QRcode or a bar code with which it is provided, configured for communicating and being recognized by said corresponding identification means (2) for said RFID tag or said QRcode or said bar code, present on each of said one or more road bins (CS).

3. A system according to claim 1, **characterized in that** each of said one or more domestic bins (CD) is univocally identifiable through coupling means configured to operate with univocal conformation of a corresponding one among said one or more road bins (CS).

4. A system according to one of the preceding claims, **characterized in that** said mechanical or electromechanical hooking and release device (3) comprises feeding, alignment and retaining means configured for joining the profile of the loading/unloading mouth of a corresponding one of the one or more domestic bins (CD), to maintain such alignment and prevent the one or more domestic bins (CD) from separating from the one or more road bins (CS).

5. A system according to claim 2, **characterized in that**:
said hooking and release device (3) is associated with opening/closing means for the at least one disposal opening (4), the at least one disposal opening (4) being adapted to be activated when a respective one of the one or more domestic bins (CD) is in an opportune slot, which can be commanded or activated by said identification means (2);
said identification means (2) are configured, further than to identify the one or more domestic bins (CD), to recognize:
user's data of the respective domestic bin (CD), and/or
the type of waste for which the respective domestic bin (CD) is intended, and/or
a shape of the respective domestic bin (CD) to be coupled to the road bin (CS).

6. A system according to claim 5, **characterized in that** said opening/closing means can be operated by independent mechanical and/or electromechanical locks, adapted to allow the selective opening of the one or more road bins (CS).

7. A system according to one of the preceding claims, **characterized in that** said hooking and release device (3) for the one or more domestic bins (CD) is positioned on the cover (5) of the one or more road bins (CS), and/or in such positions to allow its use also by handicapped persons.

8. A system according to one of the preceding claims, **characterized in that**:
- said identification (2), communication and recognition means;
- said hooking and release device (3); and
- all electromechanical and electronic devices present on the one or more road bins (CS);
are fed by at least one battery arranged on a respective edge of the one or more road bins (CS).

9. A system according to the preceding claim, **characterized in that**, in order to optimize the use of the battery, the opening/closing means and the recognition means, provided on the hooking and release device (3), is configured for usually being switched off and for only being switched on at the time of disposal, that is to say when the corresponding one of the one or more domestic bins (CD) is introduced into the hooking and release device (3) present on the one or more road bins (CS).

10. A system according to one of the preceding claims, **characterized in that** each of the one or more domestic bins (CD) is provided with retaining means (8) for a cover (6) of the domestic bin (CD), associated with a position of its carrying handle (7), so that during the feeding of the domestic bin (CD) into the alignment means of the hooking and release device (3), said domestic bin (CD) remains closed to prevent spillage of the waste contained therein.

11. A system according to the preceding claim, **characterized in that** said retaining means (8) are aligned with the hooking and release device (3) and are configured to free the cover (6) of each of the one or more domestic bins (CD) allowing it to be emptied.

## Patentansprüche

1. System für die volumetrische Entsorgung von Abfall in Straßenbehältern (CS), über dem Boden oder unterirdisch oder teilweise unterirdisch, die von oben oder von unten zu entleeren sind, wobei das System Folgendes umfasst:
- einen oder mehrere Straßenbehälter (CS), die mit Identifikations- (2), Kommunikations- und Erkennungsmitteln versehen sind, wobei die Identifikationsmittel (2) wenigstens eines von einem RFID-Lesegerät, einem QR-Code-Lesegerät und einem Strichcode-Lesegerät umfassen und dafür konfiguriert sind, eine eindeutige Identifikation wenigstens eines entsprechenden RFID-Chips (1) oder QR-Codes oder Strichcodes zu gewährleisten, und
- einen oder mehrere Haushaltsbehälter (CD), die mit wenigstens einem entsprechenden RFID-Chip (1), QR-Code oder Strichcode versehen sind,
wobei jeder von dem einen oder den mehreren Straßenbehältern (CS) eine Hauptentleerungsöffnung aufweist, die durch einen Deckel (5) oder eine nicht zu öffnende Rückwand für Benutzer unzugänglich gemacht ist, und ferner mit wenigstens einer Entsorgungsöffnung (4) versehen ist, die eine mechanische oder elektromechanische Einhak- und Lösevorrichtung (3) für den einen oder die mehreren Haushaltsbehälter (CD) umfasst, wobei die Einhak- und Lösevorrichtung (3) dafür konfiguriert ist, die volumetrische Entsorgung von Abfall nur in dem Fall zu ermöglichen, dass ein entsprechender von dem einen oder den mehreren Haushaltsbehältern (CD) durch die Identifikationsmittel (2) erkannt wird, wobei der eine oder die mehreren Haushaltsbehälter (CD) als eine volumetrische Maßeinheit verwendbar sind.

2. System nach dem vorhergehenden Anspruch, **dadurch gekennzeichnet, dass** jeder von dem einen oder den mehreren Haushaltsbehältern (CD) mit Hilfe eines RFID-Etiketts oder eines QR-Codes oder eines Strichcodes, womit er versehen ist, eindeutig identifizierbar ist, dafür konfiguriert, zu kommunizieren und durch die entsprechenden Identifikationsmittel (2) für das RFID-Etikett oder den QR-Code oder den Strichcode erkannt zu werden, die an jedem von dem einen oder den mehreren Straßenbehältern (CS) vorhanden sind.

3. System nach Anspruch 1, **dadurch gekennzeichnet, dass** jeder von dem einen oder den mehreren Haushaltsbehältern (CD) durch Kopplungsmittel eindeutig identifizierbar ist, die dafür konfiguriert sind, mit einer eindeutigen Anpassung eines entsprechenden unter dem einen oder den mehreren Straßenbehältern (CS) zu arbeiten.

4. System nach einem der vorhergehenden Ansprüche, **dadurch gekennzeichnet, dass** die mechanische oder elektromechanische Einhak- und Lösevorrichtung (3) Zuführungs-, Ausrichtungs- und Rückhaltemittel umfasst, die dafür konfiguriert sind, sich mit dem Profil der Lade-/Entladeöffnung eines entsprechenden von dem einen oder den mehreren Haushaltsbehältern (CD) zu verbinden, um eine solche Ausrichtung aufrechtzuerhalten und zu verhindern, dass sich der eine oder die mehreren Haushaltsbehälter (CD) von dem einen oder den mehreren Straßenbehältern (CS) trennen.

5. System nach Anspruch 2, **dadurch gekennzeichnet, dass**:
die Einhak- und Lösevorrichtung (3) mit Öffnungs-/Schließmitteln für die wenigstens eine Entsorgungsöffnung (4) verknüpft ist, wobei die wenigstens eine Entsorgungsöffnung (4) angepasst ist, um aktiviert zu werden, wenn sich ein jeweiliger von dem einen oder den mehreren Haushaltsbehältern (CD) in einem passenden Schlitz befindet, der durch die Identifikationsmittel (2) angewiesen oder aktiviert werden kann,
die Identifikationsmittel (2) dafür konfiguriert sind, über das Identifizieren des einen oder der mehreren Haushaltsbehälter (CD) hinaus, Folgendes zu erkennen: Benutzerdaten des jeweiligen Haushaltsbehälters (CD) und/oder
die Art von Abfall, für die der jeweilige Haushaltsbehälter (CD) vorgesehen ist, und/oder
eine Form des jeweiligen Haushaltsbehälters (CD), die an den Straßenbehälter (CS) gekoppelt werden soll.

6. System nach Anspruch 5, **dadurch gekennzeichnet, dass** die Öffnungs-/Schließmittel durch unabhängige mechanische und/oder elektromechanische Verriegelungen betätigt werden können, um das selektive Öffnen des einen oder der mehreren Straßenbehälter (CS) zu ermöglichen.

7. System nach einem der vorhergehenden Ansprüche, **dadurch gekennzeichnet, dass** die Einhak- und Lösevorrichtung (3) für den einen oder die mehreren Haushaltsbehälter (CD) an dem Deckel (5) des einen oder der mehreren Straßenbehälter (CS) und/oder in solchen Positionen, dass ihre Verwendung auch durch behinderte Personen ermöglicht wird, angeordnet ist.

8. System nach einem der vorhergehenden Ansprüche, **dadurch gekennzeichnet, dass**:
- die Identifikations- (2), Kommunikations- und Erkennungsmittel,
- die Einhak- und Lösevorrichtung (3) und
- alle elektromechanischen und elektronischen Vorrichtungen, die an dem einen oder den mehreren Straßenbehältern (CS) vorhanden sind,
durch wenigstens eine Batterie gespeist werden, die an einer jeweiligen Kante des einen oder der mehreren Straßenbehälter (CS) angeordnet ist.

9. System nach dem vorhergehenden Anspruch, **dadurch gekennzeichnet, dass**, um die Verwendung der Batterie zu optimieren, die Öffnungs-/Schließmittel und die Erkennungsmittel, die an der Einhak- und Lösevorrichtung (3) bereitgestellt werden, dafür konfiguriert sind, üblicherweise ausgeschaltet zu sein und nur zum Zeitpunkt der Entsorgung eingeschaltet zu werden, das heißt, wenn der entsprechende von dem einen oder den mehreren Haushaltsbehältern (CD) in die Einhak- und Lösevorrichtung (3) eingeführt wird, die an dem einen oder den mehreren Straßenbehältern (CS) vorhanden ist.

10. System nach einem der vorhergehenden Ansprüche, **dadurch gekennzeichnet, dass** jeder von dem einen oder den mehreren Haushaltsbehältern (CD) mit Rückhaltemitteln (8) für einen Deckel (6) des Haushaltsbehälters (CD) versehen ist, die mit einer Position von dessen Tragegriff (7) verknüpft sind, so dass während des Zuführens des Haushaltsbehälters (CD) in die Ausrichtungsmittel der Einhak- und Lösevorrichtung (3) der Haushaltsbehälter (CD) geschlossen bleibt, um ein Verschütten des Abfalls, der in demselben enthalten ist, zu verhindern.

11. System nach dem vorhergehenden Anspruch, **dadurch gekennzeichnet, dass** die Rückhaltemittel (8) mit der Einhak- und Lösevorrichtung (3) ausgerichtet sind und dafür konfiguriert sind, den Deckel (6) jedes von dem einen oder den mehreren Haushaltsbehältern (CD) freizugeben, um zu ermöglichen, dass er entleert wird.

## Revendications

1. Système d'élimination volumétrique de déchets dans des bennes (CS) hors-sol ou enterrées ou partiellement enterrées, pouvant être vidées par le dessus ou par le dessous, le système comprenant :
- une ou plusieurs bennes (CS) qui sont dotées de moyens d'identification (2), de communication et de reconnaissance, dans lequel les moyens d'identification (2) comprennent au moins l'un parmi un lecteur RFID, un lecteur de code QR et un lecteur de code-barres, et sont configurés pour fournir une identification univoque d'au moins une puce RFID (1) ou un code QR ou un code-barres correspondant et
- une ou plusieurs poubelles domestiques (CD) qui sont dotées d'au moins une puce RFID (1), un code QR ou un code-barres correspondant ;
dans lequel chacune des une ou plusieurs bennes (CS) présente une ouverture de vidage principale créée inaccessible aux utilisateurs par un couvercle (5) ou une partie arrière non ouvrable, et est en outre dotée d'au moins une ouverture d'élimination (4) comprenant un dispositif d'accrochage et de libération mécanique ou électromécanique (3) pour les une ou plusieurs poubelles domestiques (CD), ledit dispositif d'accrochage et de libération (3) étant configuré pour ne permettre l'élimination volumétrique de déchets que dans le cas où une poubelle correspondante parmi les une ou plusieurs poubelles domestiques (CD) est reconnue par lesdits moyens d'identification (2) ; dans lequel lesdites une ou plusieurs poubelles domestiques (CD) peuvent être utilisées en tant qu'unité de mesure volumétrique.

2. Système selon la revendication précédente, **caractérisé en ce que** chacune desdites une ou plusieurs poubelles domestiques (CD) est identifiable sans équivoque au moyen d'une étiquette RFID ou d'un code QR ou d'un code-barres dont elle est dotée, configuré pour communiquer et être reconnu par lesdits moyens d'identification correspondant (2) pour ladite étiquette RFID ou ledit code QR ou ledit code-barres, présent sur chacune desdites une ou plusieurs bennes (CS).

3. Système selon la revendication 1, **caractérisé en ce que** chacune desdites une ou plusieurs poubelles domestiques (CD) est identifiable sans équivoque par l'intermédiaire de moyens de couplage configurés pour fonctionner en conformation univoque d'une benne correspondante parmi lesdites une ou plusieurs bennes (CS).

4. Système selon l'une des revendications précédentes, **caractérisé en ce que** ledit dispositif d'accrochage et de libération mécanique ou électromécanique (3) comprend des moyens d'insertion, d'alignement et de retenue configurés pour se raccorder au profil de l'ouverture de chargement/déchargement d'une poubelle correspondante parmi les une ou plusieurs poubelles domestiques (CD), pour maintenir un tel alignement et empêcher les une ou plusieurs poubelles domestiques (CD) de se séparer des une ou plusieurs bennes (CS).

5. Système selon la revendication 2, **caractérisé en ce que** :
ledit dispositif d'accrochage et de libération (3) est associé à des moyens d'ouverture/fermeture pour la au moins une ouverture d'élimination (4), la au moins une ouverture d'élimination (4) étant conçue pour être activée lorsqu'une poubelle respective parmi les une ou plusieurs poubelles domestiques (CD) se trouve en un emplacement opportun, qui peut être commandé ou activé par lesdits moyens d'identification (2) ;
lesdits moyens d'identification (2) sont configurées, outre que pour identifier les une ou plusieurs poubelles domestiques (CD), pour reconnaître :
des données d'utilisateur de la poubelle domestique respective (CD), et/ou
le type de déchets pour lequel la poubelle domestique respective (CD) est destinée, et/ou
une forme de la poubelle domestique respective (CD) à coupler à la benne (CS).

6. Système selon la revendication 5, **caractérisé en ce que** lesdits moyens d'ouverture/fermeture peuvent être actionnés par des éléments de verrouillage mécaniques et/ou électromécaniques indépendants, conçus pour permettre l'ouverture sélective des une ou plusieurs bennes (CS).

7. Système selon l'une des revendications précédentes, **caractérisé en ce que** ledit dispositif d'accrochage et de libération (3) pour les une ou plusieurs poubelles domestiques (CD) est positionné sur le couvercle (5) des une ou plusieurs bennes (CS), et/ou dans des positions permettant également son utilisation par des personnes handicapées.

8. Système selon l'une des revendications précédentes, **caractérisé en ce que** :
- lesdits moyens d'identification (2), de communication et de reconnaissance ;
- ledit dispositif d'accrochage et de libération (3) ; et
- tous les dispositifs électromécaniques et électroniques présents sur les une ou plusieurs bennes (CS) ;
sont alimentés par au moins une batterie agencée sur un bord respectif des une ou plusieurs bennes (CS).

9. Système selon la revendication précédente, **caractérisé en ce que**, afin d'optimiser l'utilisation de la batterie, les moyens d'ouverture/fermeture et les moyens de reconnaissance, fournis sur le dispositif d'accrochage et de libération (3), est configuré pour généralement être mis hors tension et pour n'être mis sous tension qu'au moment de l'élimination, c'est-à-dire lorsqu'une poubelle correspondante parmi les une ou plusieurs poubelles domestiques (CD) est introduite dans le dispositif d'accrochage et de libération (3) présent sur les une ou plusieurs bennes (CS).

10. Système selon l'une des revendications précédentes, **caractérisé en ce que** chacune des une ou plusieurs poubelles domestiques (CD) est dotée de moyens de retenue (8) pour un couvercle (6) de la poubelle domestique (CD), associés à une position de sa poignée de transport (7), de sorte que pendant l'insertion de la poubelle domestique (CD) dans les moyens d'alignement du dispositif d'accrochage et de libération (3), ladite poubelle domestique (CD) reste fermée pour empêcher le déversement des déchets contenus dans celle-ci.

11. Système selon la revendication précédente, **caractérisé en ce que** lesdits moyens de retenue (8) sont alignés par rapport au dispositif d'accrochage et de libération (3) et sont configurés pour libérer le couvercle (6) de chacune des une ou plusieurs poubelles domestiques (CD), lui permettant d'être vidée.
